# EUROPÄISCHE PATENTSCHRIFT

(11) **EP 2 363 284 B1**
(45) Veröffentlichungstag und Bekanntmachung des Hinweises auf die Patenterteilung: **03.08.2016**
(21) Anmeldenummer: 11154483.9
(22) Anmeldetag: 15.02.2011
(51) Int. Cl.: B32B 17/10, B61D 25/00, B61D 19/02, C03C 27/12

(54) **Notausstiegsfenster**
Emergency exit window
Fenêtre de sortie d'urgence

(30) Priorität: 24.02.2010 DE 102010000530
(43) Veröffentlichungstag der Anmeldung: 07.09.2011
(73) Patentinhaber: Saint-Gobain Glass France, 92400 Courbevoie (FR)
(72) Erfinder: Gernhardt, Thomas, 53859, Niederkassel (DE); Kleitsch, Michael, 50997, Köln (DE)
(74) Vertreter: Lendvai, Tomas

(56) Entgegenhaltungen:
- EP-A2- 0 908 302
- DE-A1- 1 530 504
- DE-A1- 10 139 959
- DE-B- 1 272 149
- DE-C1- 10 207 600
- DE-U1- 8 910 916

## Beschreibung

Die Erfindung betrifft ein Notausstiegsfenster, insbesondere für Schienenfahrzeuge, mit wenigstens einer mit dem Fensterrahmen fest verbundenen Verbundglasscheibe aus einer vorgespannten Glasscheibe und einer mit dieser verbundenen kleineren Glasscheibe, die gegenüber dem Rand der vorgespannten Glasscheibe einschließlich der Zwischenschicht stufenartig zurückgesetzt ist, und bei der der überstehende Randbereich der vorgespannten Glasscheibe im Fensterrahmen befestigt ist.

In seiner einfachsten Ausführung besteht ein Notausstiegsfenster aus einer monolithischen vorgespannten Glasscheibe, einer so genannten Einscheiben-Sicherheitsglasscheibe (ESG-Scheibe), die im Notfall durch ein geeignetes Werkzeug mit einer harten Spitze zerstört wird. Sie zerfällt dadurch augenblicklich in kleine Glaskrümel und gibt auf diese Weise die Fensteröffnung frei. Für die Zerstörung der Glasscheibe ist üblicherweise ein hierfür geeignetes Werkzeug in Form eines mit einer Diamantspitze versehenen Hammers in unmittelbarer Nähe des Fensters angeordnet, so dass es im Bedarfsfall schnell eingesetzt werden kann.

Ein Notausstiegsfenster, bei dem eine ESG-Scheibe mit einer kleineren Glasscheibe verbunden ist, ist aus der DE 10207600 C1 bekannt. Bei diesem bekannten Notausstiegsfenster ist die ESG-Scheibe an drei Rändern an einer rahmenartigen Unterkonstruktion befestigt. Die kleinere Glasscheibe, bei der es sich um eine dünnere Flachglasscheibe handelt, endet einschließlich der Zwischenschicht an der vierten Seite gemeinsam mit der ESG-Scheibe, und an den übrigen Seiten ihres Umfangs beabstandet von den Rändern der ESG-Scheibe. Dieses Notausstiegsfenster umfasst ferner eine in die Zwischensicht eingebettetes Verbindungselement, das an der rahmenartigen Unterkonstruktion befestigt ist. Um die Notausstiegsfunktion zu aktivieren, wird die ESG-Scheibe mit einem Nothammer zertrümmert, wodurch die Verbindung mit der rahmenartigen Unterkonstruktion an drei Seiten verloren geht. Dadurch kann die rahmenartige Unterkonstruktion zusammen mit dem Verbindungselement und der kleineren Glasscheibe um die vierte Seite herum aufgeklappt werden, so dass die Fensteröffnung freigegeben wird. Dieses bekannte Notausstiegsfenster ist sehr aufwändig in der Herstellung und erfordert eine in der Höhe gestufte rahmenartige Unterkonstruktion. Außerdem ist der über die kleinere Glasscheibe überstehende Rand der ESG-Scheibe verhältnismäßig breit, so dass beim Aufklappen der rahmenartigen Unterkonstruktion verhältnismäßig große zusammenhängende Glasbruchstücke im Fensterrahmen verbleiben, die zu Schnittverletzungen führen können.

Es sind auch Glasscheiben mit integrierter Notausstiegsfunktion bekannt. Bei der aus der DE 10119315 C1 bekannten Isolierglasscheibe mit integrierter Notausstiegsfunktion sind im Zwischenraum zwischen den beiden Glasscheiben eine Schlagbolzeneinheit und ein Airbag angeordnet. Im Notfall werden durch die Schlagbolzeneinheit die beiden Glasscheiben, bei denen es sich auch um zwei Verbundglasscheiben handeln kann, angeritzt und durch den sich aufblähenden Airbag heraus gedrückt. Die Selbstzerstörung der Isolierglaseinheit muss in diesem Fall durch einen Signalgeber über Fernsteuerung ausgelöst werden.

Die DE 10045006 beschreibt eine Verbundglasscheibe aus zwei vorgespannten Glasscheiben mit integrierter Notausstiegsfunktion. Die polymere Zwischenschicht besteht aus zwei verschiedenen Polymeren mit unterschiedlicher Reißfestigkeit wobei das Polymer mit geringerer Reißfestigkeit Sollbruchstellen bildet, an denen die Zwischenschicht reißt. Ferner ist die Zwischenschicht an einer Stelle, dem Anschlagpunkt, unterbrochen. An dieser Stelle sind in dem so gebildeten Hohlraum Körner eines Materials mit höherer Härte als der des Glases angeordnet. Durch einen Schlag auf die Glasscheibe am Anschlagpunkt werden die beiden ESG-Scheiben durch die harten Körner zerstört. Die Zwischenschicht lässt sich an den Sollbruchstellen zerreißen, und die Öffnung wird auf diese Weise frei gegeben. Dieses bekannte Notausstiegsfenster ist in seinem Aufbau und in seiner Herstellungsweise ebenfalls sehr aufwändig.

Andere bekannte Systeme von Notausstiegsfenstern umfassen spezielle Fensterrahmen-Konstruktionen, die im Notfall ohne Zerstörung der Glasscheiben die Auslösung des gesamten Fensters aus ihrer Verankerung ermöglichen. Beispiele für derartige Konstruktionen finden sich in den Druckschriften DE 2146788, EP 0611988, DE 4223535 C2, DE 10026117 A1, DE 192006057288 A1, EP 0061198 B1, EP 0968861 und EP 0748710.

EP 0 908 302 A2 offenbart einen Aufbau einer automobilen Verbundglasscheibe, bei dem die Innenscheibe eine größere Umfangsfläche als die Außenscheibe aufweist.

DE 1 272 149 offenbart eine Verbundscheibe mit einer Außenscheibe aus gehärtetem Glas und einer kleineren Innenscheibe aus nicht gehärtetem Glas.

Der Erfindung liegt die Aufgabe zugrunde, ein eine ESG-Scheibe umfassendes Notausstiegsfenster zu entwickeln, das einerseits keinerlei zusätzlichen konstruktiven Maßnahmen für die Auslösung der ESG-Scheibe aus dem Fensterrahmen erfordert und daher einfach in der Herstellung ist, und bei dem andererseits die Verletzungsgefahr beim Ausstieg durch im Fensterrahmen festgehaltene Glassplitter so weit wie möglich verringert wird. Das Notausstiegsfenster soll selbstverständlich alle Bedingungen erfüllen, wie sie in der "Verwaltungsvorschrift zur Prüfung von Notein- und Notausstiegsfenstern in Schienenfahrzeugen" des Eisenbahn-Bundesamtes festgelegt sind.

Gemäß der Erfindung wird diese Aufgabe gelöst durch eine Verbundglasscheibe mit den Merkmalen des Anspruchs 1.

Gemäß einem wesentlichen Merkmal der Erfindung wird eine Verbundglasscheibe als Stufenglasscheibe ausgebildet, bei der die größere Glasscheibe aus einer ESG-Scheibe besteht, deren Rand auf allen Seiten über die kleinere Glasscheibe übersteht und für die Befestigung im Fensterrahmen dient, und bei der die kleinere Glasscheibe eine Teilvorspannung aufweist.

Während die Druckspannungswerte einer ESG-Scheibe bei 90 bis 120 Mpa liegen, sollen die Druckspannungswerte bei der teilvorgespannten Glasscheibe nur etwa 60 bis 80 Mpa betragen. Da die Höhe der erforderlichen Druckspannungen in der teilvorgespannten Glasscheibe in einem gewissen Maß von der Dicke der Glasscheibe abhängig ist, ist die Teilvorspannung im Einzelfall so auszuführen, dass beim Zerstören der teilvorgespannten Glasscheibe Bruchstücke mit einer Größe von 80 bis 250 mm entstehen. Die teilvorgespannte Glasscheibe zerspringt dann beim Einschlagen ebenfalls in ihrer Gesamtheit, doch sind die entstehenden Bruchstücke groß genug, um das vollständige Herausdrücken der Bruchstücke der ESG-Scheibe im Bereich des Fensterrahmens zu unterstützen.

Da außerdem zwischen der Halterung der ESG-Scheibe und dem Rand der teilvorgespannten Glasscheibe ein in Abhängigkeit von der Dicke der ESG-Scheibe definierter Spalt vorgesehen ist, wird hierdurch gewährleistet, dass das zersprungene Scheibenpaket sich einerseits ohne große Kraftanstrengung vollständig aus der Einfassung löst, andererseits aber keine größeren zusammenhängenden Bruchstückcluster im Rahmen verbleiben, die zu Verletzungen führen können. Auf diese Weise werden sowohl hinsichtlich der Herauslösung des zerbrochenen Scheibenpakets als auch hinsichtlich der Verletzungsgefahr optimale Bedingungen erreicht. Andererseits erfordert das Fenster keine besonderen konstruktiven Maßnahmen und kann mit Hilfe der üblichen Verfahren hergestellt werden.

Das erfindungsgemäße Notausstiegsfenster kann auch als Isolierglasscheibe ausgebildet sein. Die Isolierglasscheibe kann beispielsweise auf der einen Seite eine erfindungsgemäß dimensionierte stufenförmige Verbundglasscheibe und auf der anderen Seite eine monolithische Glasscheibe aufweisen, bei der es sich ebenfalls um eine ESG-Scheibe handelt. In diesem Fall wird der frei bleibende Spalt am Rand der Verbundglasscheibe in Abhängigkeit von der dickeren der beiden ESG-Scheiben der Isolierglasscheibe dimensioniert.

Wenn die Isolierglasscheibe aus zwei Verbundglasscheiben aufgebaut ist, die beide eine am Rand stufenartig vorstehende ESG-Scheibe aufweisen, die jedoch verschieden dick sind, dann muss für die Dimensionierung des Spalts ebenfalls die Dicke der dickeren ESG-Scheibe zugrunde gelegt werden. Falls die beiden ESG-Scheiben die gleiche Dicke aufweisen, sind die erfindungsgemäßen Bedingungen erfüllt, wenn nur die Dicke einer ESG-Scheibe für die Ermittlung der Spaltbreite zugrunde gelegt wird.

Weitere Merkmale und Vorteile der Erfindung ergeben sich aus den Unteransprüchen und aus der nachfolgenden Beschreibung verschiedener Ausführungsbeispiele anhand der Zeichnungen. Diese zeigen jeweils als Schnittdarstellung einen Ausschnitt im Bereich des Fensterrahmens.

Von den Zeichnungen zeigt
- Fig. 1: ein erfindungsgemäßes Notausstiegsfenster in seiner einfachsten Ausführungsform;
- Fig. 2: eine Ausführungsform einer erfindungsgemäß aufgebauten und durch Glashalteleisten im Fensterrahmen eingebauten Isolierglasscheibe, und
- Fig. 3: eine andere Ausführungsform eines erfindungsgemäß aufgebauten Notausstiegsfensters, bei der die Isolierglasscheibe mit dem Falz des Fensterrahmens verklebt ist.

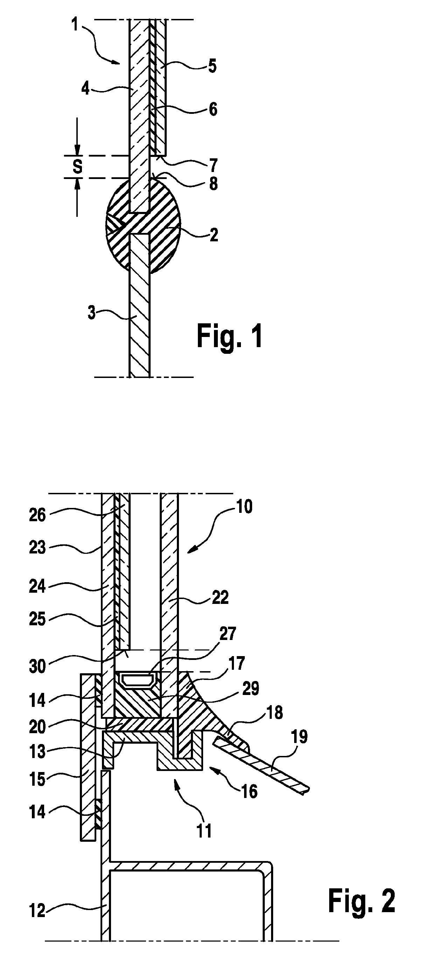

Bei der in Fig. 1 dargestellten Ausführungsform besteht das Notausstiegsfenster aus einer Verbundglasscheibe 1, die mit Hilfe des Gummirahmens 2 in die Fensteröffnung der Seitenwand 3 beispielsweise eines Schienenfahrzeugs eingesetzt ist. Die Verbundglasscheibe 1 besteht aus einer auf der Außenseite angeordneten etwa 8 mm dicken ESG-Scheibe 4 und einer der Innenseite zugewandten etwa 3 mm dicken teilvorgespannten Glasscheibe 5. Die teilvorgespannte Glasscheibe 5 ist kleiner als die ESG-Scheibe 4 und bildet auf dem gesamten Scheibenumfang mit der ESG-Scheibe 4 eine Stufe. Nur der vorstehende Randbereich der ESG-Scheibe 4 ist im Gummirahmen 2 eingespannt.

Die beiden Glasscheiben 4 und 5 sind über eine 0,38 mm dicke Folie 6 aus Polyvinylbutyral nach einem für die Verbundglasherstellung üblichen Verfahren miteinander verbunden. Die PVB-Folie 6 endet bündig mit der teilvorgespannten Glasscheibe 5. Die teilvorgespannte Glasscheibe 5 ist so dimensioniert, dass zwischen ihrer Umfangsfläche 7 und der Begrenzung 8 des Gummirahmens 2 auf dem gesamten Scheibenumfang ein frei bleibender Spalt S verbleibt. Die Breite dieses Spaltes S beträgt bei einer 8 mm dicken ESG-Scheibe 8 ± 2 mm.

Bei der in Fig. 2 dargestellten Ausführungsform des Notausstiegsfensters ist die Isolierglasscheibe 10 mit Hilfe eines metallischen Fensterrahmens 11 in der Fensteröffnung der Seitenwand 12 eines Fahrzeugs, beispielsweise eines Schienenfahrzeugs, befestigt. Der Fensterrahmen 11 umfasst einen Auflagesteg 13 für die Isolierglasscheibe 10, eine über Dichtprofile 14 an der Seitenwand 12 anliegende Glashalteleiste 15 und einen U-förmigen Abschnitt 16, in den das Dichtprofil 17 eingesetzt wird, dessen Dichtlippe 18 auf der Innenverkleidung 19 aufliegt. Zwischen dem Auflagesteg 13 des Fensterrahmens 11 und den Stirnflächen der Isolierglasscheibe 10 sind Tragklötze 20 aus geeignetem Material zwischengeschaltet.

Die Isolierglasscheibe 10 umfasst eine auf der Innenseite des Fahrzeugs angeordnete Glasscheibe 22 aus ESG und eine auf der Außenseite angeordnete Glasscheibe 23 aus Verbundglas. Die Innenscheibe 22 aus ESG hat eine Dicke von 5 mm. Die Verbundglasscheibe 23 besteht aus einer auf der Außenseite angeordneten 4 mm dicken ESG-Scheibe 24 und einer mit dieser über eine PVB-Zwischenschicht 25 verbundenen Glasscheibe 26 aus teilvorgespanntem Glas. Die ESG-Scheibe 24 hat eine Dicke von 4 mm, und die teilvorgespannte Glasscheibe 25 eine Dicke von etwa 3 mm.

Die teilvorgespannte Glasscheibe 26 der Verbundglasscheibe 23 hat kleinere Flächenabmessungen als die ESG-Scheibe 22, so dass diese auf ihrem gesamten Umfang über die Glasscheibe 26 hinausragt. Auf diesem über die Glasscheibe 26 hinausragenden Abschnitt ist die Verbundglasscheibe 23 über den Abstandshalterahmen 27 mit dem Rand der ESG-Scheibe 22 verbunden. Der Abstandshalterahmen 27 ist mit den beiden ESG-Scheiben 22 und 24 mit Hilfe von Butylraupen verklebt, während die von den Randbereichen der Glasscheiben und dem Abstandshalterahmen 27 gebildete Hohlkehle mit einer Klebemasse 29 aus Thiokol ausgefüllt ist. Es handelt sich hierbei um die üblichen Verklebetechniken für Isolierglasscheiben.

In diesem Fall ist die teilvorgespannte Glasscheibe 26 um so viel kleiner als die die mit ihr verbundene ESG-Scheibe 24, dass zwischen der Umfangsfläche 30 der Glasscheibe 26 und dem mit der Glasscheibe 24 verklebten Abstandshalterahmen 27 ein frei bleibender Spalt S gebildet wird. In diesem Fall richtet sich die Breite des Spaltes S nach der Dicke der dickeren der beiden ESG-Scheiben 22 und 24, das heißt sie beträgt 5±2 mm.

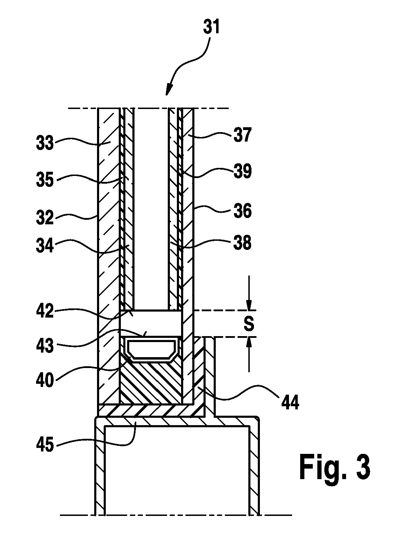

Bei der in der Fig. 3 dargestellten Ausführungsform besteht das Notausstiegsfenster aus einer Isolierglasscheibe 31, die in diesem Fall aus zwei Verbundglasscheiben 32 und 36 besteht, die am Rand über den Abstandsrahmen 40 miteinander verklebt sind. Die auf der Außenseite angeordnete Verbundglasscheibe 32 umfasst die außen angeordnete 8 mm dicke ESG-Scheibe 33 und die zum Scheibenzwischenraum hin angeordnete etwa 3 mm dicke kleinere teilvorgespannte Glasscheibe 34, die über die PVB-Zwischenschicht 35 miteinander verbunden sind. Die zur Innenseite des Fahrzeugs hin gerichtete Verbundglasscheibe 36 umfasst eine 4 mm dicke ESG-Scheibe 37 und eine etwa 3 mm dicke teilvorgespannte kleinere Glasscheibe 38, die mit Hilfe der PVB-Zwischenschicht 39 miteinander verbunden sind. Die Abmessungen der teilvorgespannten Glasscheiben 34 und 38 sind so gewählt, dass der zwischen ihren Umfangsflächen 42 und der Innenfläche 43 des mit den Randbereichen der ESG-Scheiben 33 und 37 verklebten Abstandshalterahmens 40 gebildete Spalt S sich nach der dickeren ESG-Scheibe 33 richtet und deshalb 8±2mm beträgt.

Die Isolierglasscheibe 31 ist in diesem Fall mit dem Falz des Fensterrahmens 44 verklebt, so dass die Außenseite der Isolierglasscheibe 31 bündig mit der Außenwand des Fahrzeugs verläuft.

An allen drei Ausführungen wurden Funktionsprüfungen entsprechend der Verwaltungsvorschrift des Eisenbahn-Bundesamtes zur Prüfung zur Prüfung von Notein- und Notausstiegsfenstern in Schienenfahrzeugen vorgenommen. Die durch diese Vorschrift gegebenen Bedingungen wurden in allen Fällen erfüllt. Insbesondere zeigte sich, dass die Gefahr von Verletzungen beim Ein- bzw. Aussteigen durch im Rahmen stecken gebliebene erheblich verringert wird.

### Bezugszeichen:

- (1): Verbundglasscheibe
- (2): Gummirahmen
- (3): Seitenwand
- (4): ESG-Scheibe
- (5): Teilvorgespannte Glasscheibe
- (6): PVB-Zwischenschicht
- (7): Umfangsfläche
- (8): Begrenzung
- (10): Isolierglas
- (11): Fensterrahmen
- (12): Seitenwand
- (13): Auflagesteg
- (14): Dichtprofil
- (15): Glashalteleiste
- (16): U-Abschnitt
- (17): Dichtprofil
- (18): Lippe
- (19): Innenverkleidung
- (20): Tragklötze
- (22): Innenscheibe
- (23): Außenscheibe
- (24): ESG-Scheibe
- (25): PVB-Zwischenschicht
- (26): Teilvorgespannte Glasscheibe
- (27): Abstandshalterahmen
- (28): Butyldichtung
- (29): Thiokolfüllung
- (30): Umfangsfläche
- (31): Isolierglassscheibe
- (32): Verbundglasscheibe
- (33): ESG-Scheibe
- (34): Teilvorgespannte Glasscheibe
- (35): PVB-Zwischenschicht
- (36): Verbundglasscheibe
- (37): ESG-Scheibe
- (38): Teilvorgespannte Glasscheibe
- (39): PVB-Zwischenschicht
- (40): Abstandsrahmen
- (42): Umfangsfläche
- (43): Innenfläche
- (44): Fensterrahmen

## Patentansprüche

1. Notausstiegsfenster, insbesondere für Schienenfahrzeuge, mit wenigstens einer mit dem Fensterrahmen fest verbundenen Verbundglasscheibe aus einer vorgespannten Glasscheibe (ESG-Scheibe) und einer mit dieser verbundenen weiteren Glasscheibe, die gegenüber dem Rand der vorgespannten Glasscheibe einschließlich der Zwischenschicht stufenartig zurückgesetzt ist, und bei der der überstehende Randbereich der vorgespannten Glasscheibe im Fensterrahmen befestigt ist, **dadurch gekennzeichnet, dass** die mit der ESG-Scheibe (4;24;33;37) verbundene weitere Glasscheibe (5;26;34;38) eine teilvorgespannte Glasscheibe ist, dass die teilvorgespannte Glasscheibe (5;26;34;38) gegenüber der ESG-Scheibe auf ihrem gesamten Umfang stufenartig zurückgesetzt ist, und dass der Abstand (Spalt S) zwischen den Umfangsflächen (7;30;42) der teilvorgespannten Glasscheibe (5;26;34;38) und der Begrenzung der Halterung (8;27;43) der ESG-Scheibe (4;22;24;33;37) in Abhängigkeit von der Dicke (D) der ESG-Scheibe so gewählt ist, dass S [mm] = D ± 2 [mm] entspricht und die Druckspannungswerte der ESG-Scheibe (4;24;33;37) 90 Mpa bis 120 Mpa und die Druckspannungswerte der teilvorgespannten Glasscheibe (5;26;34;38) 60 Mpa bis 80 Mpa betragen.

2. Notausstiegsfenster nach Anspruch 1, **dadurch gekennzeichnet, dass** die Höhe der Vorspannung der teilvorgespannten Glasscheibe (5;26;34;38) so gewählt ist, dass die beim Zerstören der teilvorgespannten Glasscheibe sich bildenden Bruchstücke Abmessungen von 80 bis 250 mm aufweisen.

3. Notausstiegsfenster nach Anspruch 1 oder 2, **dadurch gekennzeichnet, dass** die Halterung für die ESG-Scheibe (4) aus einem einstückigen elastischen Einfassprofil (2) besteht.

4. Notausstiegsfenster nach Anspruch 1 oder 2 aus einer Isolierglasscheibe (10;31) mit zwei ESG-Scheiben (22;24; 33,37), **dadurch gekennzeichnet, dass** die Halterung für die ESG-Scheiben (22;24;33,37) aus dem mit den ESG-Scheiben (22;24;33,37) verklebten Abstandshalter (27;40) der Isolierglasscheibe (10;31) besteht.

5. Notausstiegsfenster nach Anspruch 4, **dadurch gekennzeichnet, dass** die Halterung für die ESG-Scheibe (24) eine die ESG-Scheibe (24) abstützende Glashalteleiste (15) umfasst.

6. Notausstiegsfenster nach einem der Ansprüche 1 bis 5, **dadurch gekennzeichnet, dass** das Notausstiegsfenster eine Isolierglasscheibe (10) ist, die aus einer Verbundglasscheibe (23) aus einer ESG-Scheibe (24) und einer teilvorgespannten Glasscheibe (26) mit gegenüber der Halterung für die ESG-Scheibe (24) zurückgesetzten Kanten, und einer über den Abstandshalterahmen (27) mit der ESG-Scheibe (24) verklebten monolithischen ESG-Scheibe (22) besteht.

7. Notausstiegsfenster nach einem der Ansprüche 1 bis 5, **dadurch gekennzeichnet, dass** das Notausstiegsfenster eine Isolierglasscheibe (31) ist, die aus zwei Verbundglasscheiben (32;36) besteht, die jeweils aus einer im Fensterrahmen gehaltenen ESG-Scheibe (33;37) und einer mit dieser verbundenen teilvorgespannten Glasscheibe (34;38) mit gegenüber der ESG-Scheibe (33;37) zurückgesetzten Kanten bestehen.

## Claims

1. Emergency exit window, in particular for rail vehicles, with at least one composite glass pane, made of a prestressed glass pane (SPSG) and another glass pane bonded thereto, fixedly bonded to the window frame, which other glass pane is set back stepwise relative to the edge of the prestressed glass pane including the intermediate layer, and wherein the protruding edge region of the prestressed glass pane is fastened in the window frame, **characterized in that** the other glass pane (5;26;34;38) bonded to the SPSG pane (4;24;33;37) is a partially prestressed glass pane, that the partially stressed glass pane (5;26;34;38) is set back stepwise relative to the SPSG pane over its entire periphery, and that the distance (gap S) between the peripheral surfaces (7;30;42) of the partially prestressed glass pane (5;26;34;38) and the boundary of the holder (8;27;43) of the SPSG pane (4;22;24;33;37) is selected as a function of the thickness (D) of the SPSG pane such that S [mm] = D ± 2 [mm] and the compressive stress values of the SPSG pane (4;24;33;37) are 90 Mpa to 120 Mpa and the compressive stress values of the partially prestressed glass pane (5;26;34;38) are 60 Mpa to 80 Mpa.

2. Emergency exit window according to claim 1, **characterized in that** the degree of prestressing of the partially prestressed glass pane (5;26;34;38) is selected such that the fragments formed upon destruction of the partially prestressed glass pane have dimensions of 80 to 250 mm.

3. Emergency exit window according to claim 1 or 2, **characterized in that** the holder for the SPSG pane (4) consists of a one-piece elastic edging profile (2).

4. Emergency exit window according to claim 1 or 2 comprising an insulating glass pane (10;31) with two SPSG panes (22;24; 33,37), **characterized in that** the holder for the SPSG panes (22;24;33,37) consists of the spacer (27;40) of the insulating glass pane (10;31) glued to the SPSG panes (22;24;33,37).

5. Emergency exit window according to claim 4, **characterized in that** the holder for the SPSG pane (24) comprises a glass holding strip (15) supporting the SPSG pane (24).

6. Emergency exit window according to one of claims 1 through 5, **characterized in that** the emergency exit window is an insulating glass pane (10), comprising a composite glass pane (23) consisting of one SPSG pane (24) and one partially prestressed glass pane (26) with edges set back relative to the mounting for the SPSG pane (24), a monolithic SPSG pane (22) glued to the SPSG pane (24) via the spacer frame (27).

7. Emergency exit window according to one of claims 1 through 5, **characterized in that** the emergency exit window is an insulating glass pane (31), comprising two composite glass panes (32;36), each of which consists of one SPSG pane (33;37) mounted in the window frame and one partially prestressed glass pane (34;38) bonded thereto with edges set back relative to the SPSG pane (33;37).

## Revendications

1. Fenêtre de sortie d'urgence, en particulier pour des véhicules sur rails, comportant au moins une vitre en verre feuilleté solidement liée au cadre de fenêtre, faite d'une vitre précontrainte (vitre ESG) et d'une autre vitre liée à celle-ci, qui est en retrait en gradin vis-à-vis du bord de la vitre précontrainte y compris la couche intermédiaire, et dans laquelle la région de bordure en saillie de la vitre précontrainte est fixée dans le cadre de fenêtre, **caractérisée par le fait que** l'autre vitre (5 ; 26 ; 34 ; 38) liée à la vitre ESG (4 ; 24 ; 33 ; 37) est une vitre partiellement précontrainte, que la vitre partiellement précontrainte (5 ; 26 ; 34 ; 38) est en retrait en gradin vis-à-vis de la vitre ESG sur sa périphérie entière, et que la distance (fente S) entre les surfaces périphériques (7 ; 30 ; 42) de la vitre partiellement précontrainte (5 ; 26 ; 34 ; 38) et la limite de support (8 ; 27 ; 43) de la vitre ESG (4 ; 22 ; 24 ; 33 ; 37) est choisie en relation avec l'épaisseur (D) de la vitre ESG de telle sorte que la relation S [mm] = D ± 2 [mm] soit satisfaite et que la valeur de la précontrainte de compression de la vitre ESG (4 ; 24 ; 33 ; 37) s'élève à 90 MPa à 120 MPa et la valeur de la contrainte de compression de la vitre partiellement précontrainte (5 ; 26 ; 34 ; 38) s'élève à 60 MPa à 80 MPa.

2. Fenêtre de sortie d'urgence selon la revendication 1, **caractérisée par le fait que** le niveau de la précontrainte de la vitre partiellement précontrainte (5 ; 26 ; 34 ; 38) est choisi de telle sorte que les morceaux de formant lors de la destruction de la vitre partiellement précontrainte présentent des dimensions de 80 à 250 mm.

3. Fenêtre de sortie d'urgence selon l'une des revendications 1 ou 2, **caractérisée par le fait que** le support pour la vitre ESG (4) se compose d'un profilé d'encadrement (2) élastique d'une seule pièce.

4. Fenêtre de sortie d'urgence selon l'une des revendications 1 ou 2 faite d'un vitrage isolant (10 ; 31) ayant deux vitres ESG (22 ; 24 ; 33 ; 37), **caractérisée par le fait que** le support pour les vitres ESG (22 ; 24 ; 33 ; 37) se compose de l'entretoise (27, 40) du vitrage isolant (10 ; 31) collé aux vitres ESG (22 ; 24 ; 33 ; 37).

5. Fenêtre de sortie d'urgence selon la revendication 4, **caractérisée par le fait que** le support pour la vitre ESG (24) comporte une bande de maintien en verre (15) supportant la vitre ESG (24).

6. Fenêtre de sortie d'urgence selon l'une des revendications 1 à 5, **caractérisée par le fait que** la fenêtre de sortie d'urgence est un vitrage isolant (10), qui se compose d'une vitre en verre feuilleté (23) faite d'une vitre ESG (24) et d'une vitre partiellement précontrainte (26) avec des bords en retrait vis-à-vis du support pour la vitre ESG (24), et d'une vitre ESG (22), monolithique, collée à la vitre ESG (24) par l'intermédiaire du cadre d'entretoise (27).

7. Fenêtre de sortie d'urgence selon l'une des revendications 1 à 5, **caractérisée par le fait que** la fenêtre de sortie d'urgence est un vitrage isolant (31), qui se compose de deux vitres en verre feuilleté (32 ; 36), qui se composent chacune d'une vitre ESG (33 ; 37) maintenue dans le cadre de fenêtre et d'une vitre partiellement précontrainte (34 ; 38) liée à celle-ci, avec des bords en retrait vis-à-vis de la vitre ESG (33 ; 37).
